# EUROPÄISCHE PATENTANMELDUNG

(11) **EP 3 375 607 A1**
(43) Veröffentlichungstag der Anmeldung: **19.09.2018**
(21) Anmeldenummer: 17161098.3
(22) Anmeldetag: 15.03.2017
(51) Int. Cl.: B33Y 50/02

(54) **VERFAHREN ZUM BESTIMMEN VON DRUCKPROZESSPARAMETERWERTEN, VERFAHREN ZUM STEUERN EINES 3D-DRUCKERS, COMPUTER-LESBARES SPEICHERMEDIUM UND 3D-DRUCKER**

(71) Anmelder: Heraeus Additive Manufacturing GmbH, 63450 Hanau (DE)
(72) Erfinder: KLOSCH-TRAGESER, Michael, 63579 Freigericht-Neuses (DE)
(74) Vertreter: Kilchert, Jochen

(57) **Zusammenfassung**

Beim 3D-Druck kann es auf Grund von der zu druckenden Geometrie zu inhomogenen Materialeigenschaften des Druckerzeugnisses kommen. Dieses Problem wird durch ein Verfahren (60, 70) zum Bestimmen von Druckprozessparameterwerten (33, 33') für einen 3D-Drucker (10) gelöst, das Folgendes umfasst:
- Erzeugen (61, 74) mindestens eines Meta-Modells (40), wobei das mindestens eine Meta-Modell (40) eine Beziehung zwischen mindestens einem Druckprozessparameter (31, 31') und mindestens einer Erzeugniseigenschaft (21, 21') eines Druckerzeugnisses (2) für Objektdaten (20) angibt, wobei die Objektdaten (20) eine digitale Repräsentation eines zu druckenden Objekts (1) angeben;
- Bestimmen (62, 75) von mindestens einem ersten Druckprozessparameterwert (33, 33') für den mindestens einen Druckprozessparameter (31, 31') in einem ersten Druckbereich (B1) und mindestens einem zweiten Druckprozessparameterwert (33, 33') für den mindestens einen Druckprozessparameter (31, 31') in einem zweiten Druckbereich (B2) unter Berücksichtigung des mindestens einen Meta-Modells (40) und den Objektdaten (20).

## Beschreibung

Die Erfindung betrifft ein Verfahren zum Bestimmen von Prozessparameterwerten für einen 3D-Drucker, ein Verfahren zum Steuern eines 3D-Druckers, ein computerlesbares Speichermedium und einen 3D-Drucker.

Es ist eine Vielzahl von Verfahren bekannt, um dreidimensionale Werkstücke aus einem oder mehreren flüssigen oder festen Werkstoffen herzustellen.

So wird zum Beispiel beim sogenannten "fused deposition modeling" (FDM) ein Werkstück schichtweise aus einem schmelzfähigen Kunststoff aufgebaut. Dabei wird ein drahtförmiger Kunststoff durch Erwärmung und Extrudieren mittels einer Düse auf eine Platte in einem Arbeitsbereich aufgebracht. Durch ein Aushärten des Kunststoffs, können Schichten nacheinander aufeinander aufgetragen werden.

Bei der Stereolithographie (SLA) wird flüssiges Epoxidharz in eine Kammer gefüllt, wobei die Oberfläche des Epoxidharzes mit einem Laser derart punktuell bestrahlt wird, dass das Epoxidharz an den bestrahlten Stellen aushärtet. Nach jedem Belichtungsschritt wird das ausgehärtete Werkstück einige Millimeter in dem Epoxidharz abgesenkt, so dass eine weitere Schicht gedruckt werden kann.

Beim selektiven Lasersintern (SLS) oder selektiven Laserschmelzen (SLM) sowie Elektronenstrahlschmelzen (SEBM) wird in einer Kammer zunächst eine dünne Schicht eines pulverförmigen Kunststoffs, eines Metalls oder einer Keramik auf eine Platte aufgetragen. Die Schichten werden durch einen Laserstrahl bzw. einen Elektronenstrahl entsprechend einer Schichtkontur des Bauteils schrittweise in das Pulverbett eingeschmolzen. Nach Abschluss einer Schicht, wird die Bauplattform geringfügig abgesenkt und eine neue Schicht aufgezogen.

Es hat sich herausgestellt, dass insbesondere bei SLS, SLM oder SEBM-Verfahren die zu druckende Geometrie von besonderer Bedeutung für die Eigenschaften des Druckerzeugnisses ist. Wird zum Beispiel in einem kleinen Bereich in kurzen Abständen Material verschmolzen, so kommt es zu einer lokalen Überhitzung des Materials. Durch die hohe Temperatur verläuft dort auch die Abkühlung, relativ zu anderen Bereichen im Bauteil, deutlich langsamer, wodurch die Materialeigenschaften des fertigen Bauteils negativ beeinflusst werden.

Die Qualität der Druckerzeugnisse variiert somit stark und führt zu unbefriedigenden Ergebnissen.

Ausgehend von diesem Stand der Technik ist es Aufgabe der vorliegenden Erfindung ein Verfahren, ein computerlesbares Speichermedium und einen 3D-Drucker anzugeben, die die vorstehend genannten Nachteile adressieren. Insbesondere ist es Aufgabe der vorliegenden Erfindung ein Verfahren anzugeben, welches das Drucken mit homogenen Materialeigenschaften des Druckerzeugnisses erlaubt. Ferner ist es Aufgabe der vorliegenden Erfindung ein Verfahren bzw. einen 3D-Drucker anzugeben, der bzw. das den Ausschuss reduziert/en. Darüber hinaus ist es Aufgabe der Erfindung gleichbleibende Druckergebnisse zu ermöglichen unabhängig von der zu druckenden Geometrie.

Die Aufgabe wird gelöst durch ein Verfahren zum Bestimmen von Druckprozessparameterwerten für einen 3D-Drucker nach Anspruch 1. Insbesondere wird die Aufgabe gelöst durch ein Verfahren, umfassend:
- Erzeugen mindestens eines Meta-Modells, wobei das mindestens eine Meta-Modell eine Beziehung zwischen mindestens einem Druckprozessparameter und mindestens einer Erzeugniseigenschaft eines Druckerzeugnisses für Objektdaten angibt, wobei die Objektdaten eine digitale Repräsentation eines zu druckenden Objekts angeben;
- Bestimmen von mindestens einem ersten Druckprozessparameterwert für den mindestens einen Druckprozessparameter in einem ersten Druckbereich und mindestens einem zweiten Druckprozessparameterwert für den mindestens einen Druckprozessparameter in einem zweiten Druckbereich unter Berücksichtigung des mindestens einen Meta-Modells und den Objektdaten.

Kern der Erfindung ist also, dass die Werte für Druckprozessparameter für unterschiedliche Druckbereiche unterschiedlich sind.

Bei der Verarbeitung metallischer und keramischer Werkstoffe ist es nämlich bisher üblich, dass Druckprozessparameter, wie Leistung, Scan-Geschwindigkeit, Linienabstand oder Überlappung während des 3D-Druckprozesses unverändert bleiben. Die vorgenannten Prozessparameter haben jedoch erheblichen Einfluss auf die Eigenschaften des Druckerzeugnisses. Zum Beispiel wird die Porosität, Rauigkeit, Dichte, Textur oder ähnliches durch die Druckprozessparameter bestimmt.

Die Erfindung verwendet ein Meta-Modell, welches die Beziehung zwischen mindestens einem Druckprozessparameter und mindestens einer Erzeugniseigenschaft des Druckerzeugnisses angibt. Unter Verwendung des Meta-Modells kann somit vorhergesagt werden, wie sich die Eigenschaften eines Druckerzeugnisses verändern, wenn Druckprozessparameterwerte geändert werden. Ein wesentlicher Vorteil der Erfindung besteht darin, dass das Bestimmen der Druckprozessparameterwerte individuell für Objektdaten durchgeführt wird.

In einer Ausführungsform können sich der erste Druckprozessparameterwert und der zweite Druckprozessparameterwert, insbesondere um einen numerischen Wert größer 0,03 % des ersten oder des zweiten Druckprozessparameterwerts, unterscheiden.

Die Druckprozessparameterwerte des ersten Druckbereichs und des zweiten Druckbereichs können also unterschiedlich sein. Es ist dadurch möglich, dass bestimmte Druckbereiche unterschiedliche Materialeigenschaften aufweisen. Insbesondere können sich die Druckprozessparameterwerte derart unterscheiden, dass beispielsweise ein gleichmäßiger Anstieg einer Größe, die eine Materialeigenschaft angibt, erreicht wird. Dadurch sind fließende Übergänge von Druckerzeugniseigenschaften möglich. Beispielweise kann die Dichte des Druckerzeugnisses in einem Bereich in eine Richtung gleichmäßig größer werden.

In einer Ausführungsform kann das vorstehend beschriebene Verfahren das Optimieren mindestens einer Erzeugniseigenschaft des Druckerzeugnisses unter Verwendung des mindestens einen Meta-Modells und unter Berücksichtigung der Objektdaten umfassen.

Durch die vorstehend beschriebene Ausführungsform wird es möglich gemacht, dass eine Objekteigenschaft, wie z.B. die Porosität, konstant auf einem Zielwert gehalten wird.

In einer Ausführungsform kann das Optimieren ein Minimieren von einer Gesamtabweichung der mindestens einen Erzeugniseigenschaft von einem Zielwert sein.

Es kann also durch das vorstehend beschriebene Verfahren die Gesamtabweichung von einem Zielwert optimiert werden. Beispielsweise kann die Summe von Einzelabweichungen an einer Vielzahl zu druckender Punkte von einem Zielwert bestimmt werden, wobei sich die Gesamtabweichung als Summe der Einzelabweichung ergibt. Die Gesamtabweichung kann dann durch Verändern der Druckprozessparameterwerte optimiert werden.

Ferner kann in einer Ausführungsform das Optimieren ein Minimieren eines Gradienten einer Erzeugniseigenschaft zwischen nebeneinander angeordneten Schmelzbahnen umfassen. Eine Schmelzbahn wird durch nacheinander gedruckte Punkte innerhalb einer Schicht definiert. Selbstverständlich kann auch kontinuierliche gedruckt werde, sodass eine Schmelzbahn einen zusammenhängenden Druckbereich innerhalb einer Schicht angibt.

In einer Ausführungsform kann das Verfahren ferner umfassen:
- Simulieren und/oder experimentelles Bestimmen mindestens einer Objekteigenschaft des Druckerzeugnisses für die Objektdaten und mindestens eines zugeordneten Druckprozessparameters;
- Erstellen mindestens einer Prozessfensterkarte, wobei die mindestens eine Prozessfensterkarte eine Zuordnung von mindestens einem Druckprozessparameterwert des zugeordneten Druckprozessparameters zu einem Erzeugniseigenschaftswert des Druckerzeugnisses angeben kann,
wobei das mindestens eine Meta-Modell unter Berücksichtigung der mindestens einen Prozessfensterkarte erzeugt werden kann.

Das mindestens eine Meta-Modell kann nach der vorstehend beschriebenen Ausführungsform bereits vor dem Drucken experimentell oder mittels Simulationsverfahren hergeleitet werden. Dies hat den Vorteil, dass das Meta-Modell beispielsweise bei dem Hersteller eines 3D-Druckers bestimmt und mit dem 3D-Drucker ausgeliefert wird. Der Kunde braucht dann nur noch die gewünschten Erzeugnisparameterwerte am Drucker selbst oder in einer entsprechenden Software, z.B. einer Slicing-Software, angeben .

Eine Prozessfensterkarte kann als eine diskrete Abbildung von einem oder mehreren Druckprozessparametern auf eine oder mehrere Erzeugniseigenschaften definiert werden. Eine Prozessfensterkarte z.B. als mehrdimensionales Array oder als Dictionary gespeichert sein.

In einer Ausführungsform kann der erste Druckbereich einer zu druckenden Druckschicht und der zweite Druckbereich derselben zu druckenden Schicht zugeordnet sein.

Es wird also möglich gemacht, dass innerhalb einer Schicht verschiedene Druckprozessparameterwerte für einen Druckprozessparamter verwendet werden. Dadurch wird die Qualität des Druckerzeugnisses erhöht.

In einer Ausführungsform können die Objektdaten die Geometrie des Druckerzeugnisses angeben.

Die Objektdaten können hierzu beispielsweise als STL-Daten oder auch als STEP oder IGES-Daten vorliegen. Es ist also möglich, die Erfindung mit einer Vielzahl von gängigen Datenformaten zu verwenden.

In einer weiteren Ausführungsform kann der erste Druckbereich und der zweite Druckbereich unter Berücksichtigung der Objektdaten, insbesondere einer Lokalgeometrie, ausgewählt werden.

Das Auswählen der Druckbereiche hat den Vorteil, dass Druckprozessparameterwerte in geometrisch schwierigen Bereichen effizient eingestellt werden können. Beispielsweise erfordern Druckbereiche, die lediglich das Drucken einer feinen Struktur erfordern, andere Druckprozessparameterwerte als Bereiche, in denen flächige Strukturen gedruckt werden. Das Auswählen der Druckbereiche unter Berücksichtigung der Objektdaten bzw. einer Lokalgeometrie ermöglicht daher das besonders genaue Einstellen der Druckprozessparameterwerte.

In einer Ausführungsform kann die mindestens eine Prozessfensterkarte mindestens einen Qualitätsbereich des Druckerzeugnisses angeben, wobei der mindestens eine Erzeugniseigenschaftswert innerhalb von definierten, insbesondere numerischen, Grenzwerten in der Prozessfensterkarte liegen kann.

Durch das Auswählen von mindestens einem Qualitätsbereich kann sichergestellt werden, dass bestimmte Anforderungen an das Druckerzeugnis auch bei Veränderungen der Druckprozessparameterwerte eingehalten werden. Die Qualitätsbereiche können entweder manuell oder maschinell festgelegt werden. Zum Beispiel kann in Zugversuchen die Festigkeit des Druckerzeugnisses überprüft werden, wobei die ermittelten Werte, bei denen ein Versagen auftritt, die Grenzen der Qualitätsbereiche angeben. Auch können mikroskopische Untersuchungen des Druckerzeugnisses maschinell durch Bildverarbeitung ausgewertet werden.

In einer Ausführungsform kann der mindestens eine Druckprozessparameter
- die Leistung des 3D-Druckers bzw. einer Strahlenquelle,
- die Scangeschwindigkeit;
- die Schichtdicke einer Schicht,
- die Überlappung von Druckbahnen bzw. Schmelzspuren,
- den Linienabstand von Druckbahnen bzw. Schmelzspuren,
- den Fokusdurchmesser eines Lasers oder eines Elektronenstrahls,
- die Pulsfolge einer Strahlenquelle,
- die Bauraumtemperatur und/oder
- die Anzahl der Belichtungen, das Belichtungsmuster
angeben.

Es ist also eine Vielzahl von Druckprozessparametern einstellbar, so dass optimale Druckerzeugnisergebnisse erreicht werden.

Die Aufgabe wird ferner gelöst durch ein Verfahren zum Steuern eines 3D-Druckers nach Anspruch 11. Insbesondere wird die Aufgabe gelöst durch ein Verfahren zum Steuern eines 3D-Druckers, Folgendes aufweisend:
- Bestimmen mindestens eines ersten Druckprozessparameterwerts für einen Druckprozessparameter und mindestens eines zweiten Druckprozessparameterwerts für den Druckprozessparameter für einen 3D-Drucker nach einer der vorhergehend beschriebenen Ausführungsformen;
- Steuern des 3D-Druckers unter Verwendung des ersten mindestens einen und des zweiten mindestens einen Druckprozessparameterwerts.

Die bestimmten Druckprozessparameterwerte können also verwendet werden um einen 3D-Drucker zu steuern. Dadurch werden optimale Druckerzeugnisqualitäten erreicht. Insbesondere wird es möglich gemacht, dass die Druckprozessparameter und die Druckprozessparameterwerte vor dem Drucken bestimmt werden. In anderen Ausführungsformen ist es aber auch möglich, dass die Druckprozessparameterwerte während des Drucks neu berechnet werden.

In einer Ausführungsform kann das Steuern des 3D-Druckers das Einstellen eines Druckerparameters unter Verwendung des ersten mindestens einen und/oder des zweiten mindestens einen Druckprozessparameterwerts umfassen.

Die vorstehend beschriebene Ausführungsform erlaubt also, dass die Druckerparameter eines 3D-Druckers bei der Steuerung eingestellt werden. Dadurch können die Erzeugniseigenschaften während des Betriebs geändert werden. Z.B. kann die Scan-Geschwindigkeit des 3D-Druckers auf den bestimmten Druckprozessparameterwert für die Scan-Geschwindigkeit eingestellt werden.

In einer Ausführungsform kann das Steuern des 3D-Druckers, das Betreiben des 3D-Druckers unter Verwendung des ersten Druckprozessparameterwerts in einem ersten Bereich einer Druckschicht und das Betreiben des 3D-Druckers unter Verwenden des zweiten Druckprozessparameterwerts in einem zweiten Bereich der Druckschicht umfassen.

Mit der vorstehend beschriebenen Ausführungsform wird es also möglich, dass die Druckprozessparameter innerhalb einer einzigen Schicht verändert werden. Dadurch können homogene Materialeigenschaften des gesamten Druckerzeugnisses erreicht werden.

Die Aufgabe wird ferner gelöst durch ein computerlesbares Speichermedium, welches Instruktionen enthält, die (mindestens) einen Prozessor dazu veranlassen, ein Verfahren nach einer der vorhergehenden Ausführungsformen zu implementieren, wenn die Instruktionen durch den Prozessor ausgeführt werden.

Es ergeben sich ähnliche oder identische Vorteile wie sie bereits mit dem vorstehend beschriebenen Verfahren beschrieben wurden.

Die Aufgabe wird ferner gelöst durch einen 3D-Drucker nach Anspruch 15. Insbesondere wird die Aufgabe gelöst durch einen 3D-Drucker, Folgendes aufweisend:
- ein Speichermedium wie vorstehend beschrieben,
- einen Prozessor, der dazu ausgebildet ist, die auf dem Speichermedium gespeicherten Instruktionen, auszuführen;
- eine Strahlenquelle,
wobei der Prozessor weiter dazu ausgebildet ist:
- die Strahlenquelle unter Verwendung eines ersten Druckprozessparameterwerts in einem ersten Bereich einer Druckschicht zu steuern und
- eine Strahlenquelle unter Verwenden eines zweiten Druckprozessparameterwerts in einem zweiten Bereich der Druckschicht zu steuern.

In einer Ausführungsform kann der 3D-Drucker als ein Elektronenstrahldrucker oder als ein Laserdrucker ausgebildet sein.

Die beschriebenen Vorteile sind daher insbesondere beim Verwenden von Elektronenstrahldruckern oder Laserdruckern vorhanden.

Sämtliche beschriebenen Verfahrensschritte können als Software oder als Hardware ausgebildet werden. Dabei können zum Beispiel integrierte Schaltkreise verwendet werden, die die Verfahrensschritte ausführen. Insbesondere können FPGAs oder digitale Signalprozessoren verwendet werden. In einigen Ausführungsformen können Berechnungsschritte auf einem Server ausgeführt werden, wobei die Ergebnisse der Berechnungen über ein Netzwerk, insbesondere ein TCP/IP-Netzwerk übertragen werden.

Die Erfindung wird nachfolgend anhand von Ausführungsbeispielen unter Bezug auf die beigefügten schematischen Zeichnungen mit weiteren Einzelheiten näher erläutert.

Dabei zeigen:
- Fig. 1: schematisch das Drucken eines Objekts;
- Fig. 2: eine schematische Draufsicht auf ein zu druckendes Objekt;
- Fig. 3: ein Flussdiagramm zum Bestimmen von Druckprozessparameterwerten;
- Fig. 4: den Zusammenhang einer Erzeugniseigenschaft und Druckprozessparametern;
- Fig. 5: eine Darstellung einer Prozessfensterkarte;
- Fig. 6: ein Flussdiagramm zum Drucken eines Druckerzeugnisses; und
- Fig. 7: eine schematische Darstellung eines 3D-Druckers.

Im Folgenden werden für gleiche oder gleichwirkende Teile dieselben Bezugsziffern verwendet.

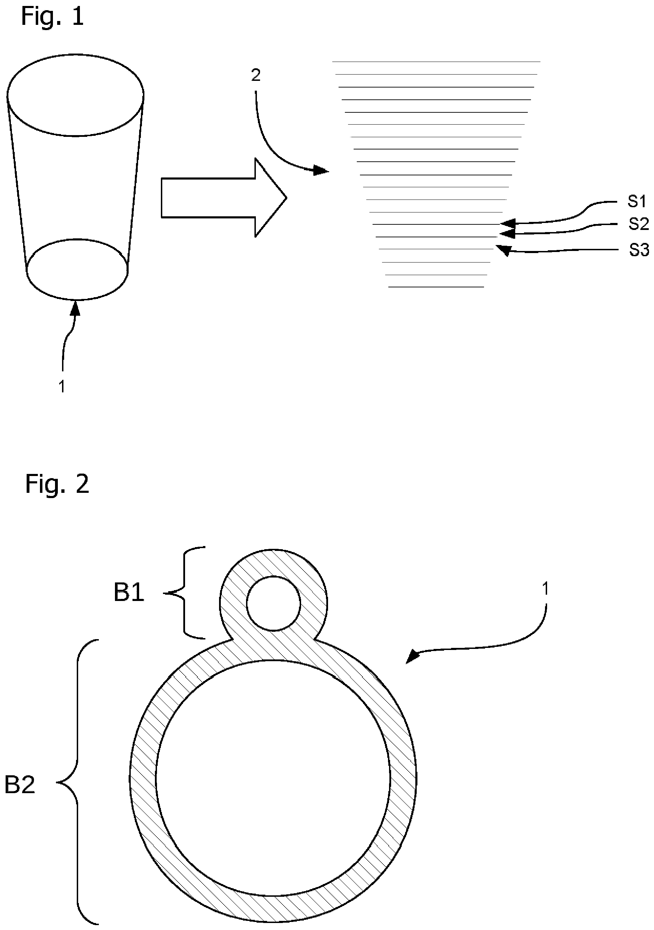

Fig. 1 zeigt schematisch das Drucken eines Objekts 1. Dabei werden Objektdaten 20, die das Objekt 1 beschreiben als CAD-Daten bereitgestellt. Es können hierzu verschiedene Datenformate, wie z.B. IGES oder STL, eingesetzt werden. Anschließend werden die Objektdaten 20 "gesliced". Das bedeutet, dass eine Software die zu druckendenden Schichten bestimmt. Aus den "gesliceten" Objektdaten 20 wird in einem Ausführungsbeispiel anschließend, z.B. in einem sog. Build-Prozessor, maschinenlesbarer Code erzeugt, der von dem 3D-Drucker gelesen werden kann.

Das Druckerzeugnis 2 wird beim Drucken aus einer Vielzahl von Schichten S1, S2, S3 aufgebaut. Beim SLS-Verfahren wird immer eine Schicht S1, S2, S3 durch das Schmelzen eines Pulvers hergestellt. Die dabei erzeugten Schweißbahnen sind genauso angeordnet, dass ein stabiler Materialverbund entsteht. So wird Schicht für Schicht das Druckerzeugnis 2 aufgebaut.

Die Fig. 2 zeigt die schematische Draufsicht auf ein zu druckendes Objekt 1. Das Objekt 1 umfasst zwei Druckbereiche B1 und B2. Der erste Druckbereich B1 ist ein im wesentlich kreisförmiger Beriech mit einem kleinen Radius. Der zweite Druckbereich B2 ist ebenso kreisförmig, jedoch mit einem weitaus größeren Radius als der erste Druckbereich B1.

Die Druckbereiche B1 und B2 definieren sich also durch die zu druckende Geometrie. Die Bereiche B1 und B2 definieren jeweils eine Lokalgeometrie. Um ein homogenes Druckerzeugnis 2 zu erhalten, ist es notwendig, dass unterschiedliche Einstellungen beim Drucken des Druckerzeugnisses 2 in Abhängigkeit von dem zu druckenden Bereich B1, B2 verwendet werden. Sonst kann es zu inhomogenen Materialeigenschaften des Druckerzeugnisses 2 kommen.

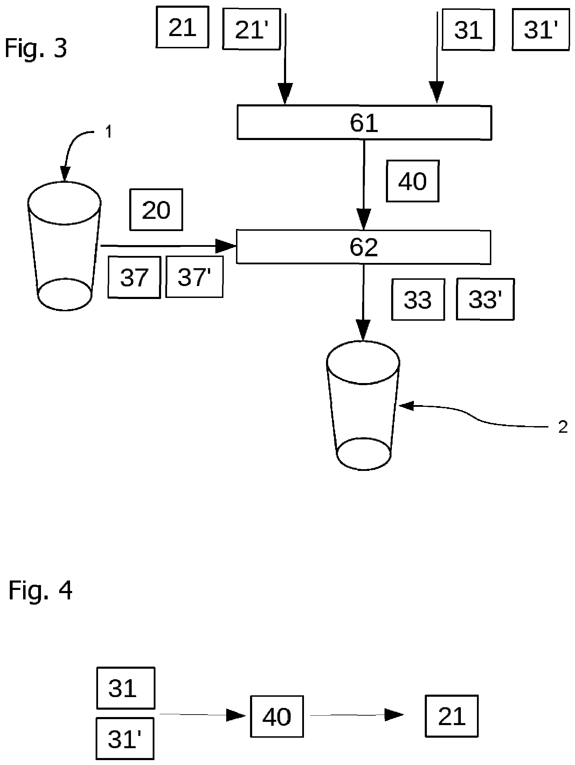

Die Fig. 3 zeigt ein Flussdiagramm zum Drucken eines Objekts 1. In einem ersten Schritt 61 wird zunächst ein Meta-Modell 40 erzeugt. Das Meta-Modell 40 gibt eine Beziehung zwischen Druckprozessparametern 31, 31' und einer Erzeugniseigenschaft 21, 21` eines Druckerzeugnisses 2 an. Druckerzeugniseigenschaften 21, 21` sind beispielsweise die Porosität des Druckerzeugnisses, die Rauigkeit, die Dichte, die Textur oder ähnliche Eigenschaften. Die Druckprozessparameter 31, 31' haben also einen Einfluss auf die vorgenannten Größen. Die Druckprozessparameter 31, 31' umfassen beispielsweise die Leistung eines 3D-Druckers 10 bzw. eines Lasers, die Schichtdicke einer Schicht S1, S2, S3, die Überlappung von Druckbahnen bzw. Schmelzspuren, den Linienabstand von Druckbahnen bzw. Schmelzspuren, den Fokusdurchmesser eines Lasers, die Pulsfolge oder auch die Anzahl der Belichtungen in einem Zeitintervall.

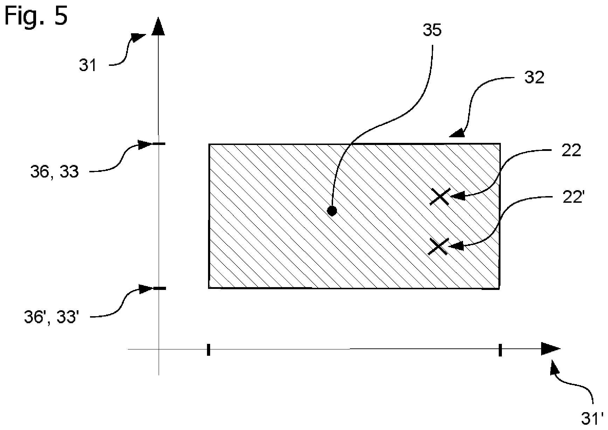

Das Erzeugen von Meta-Modellen 40 wird im Zusammenhang mit der Fig. 5 näher erläutert.

Im Schritt 62 werden für die Druckprozessparameter 31, 31' Druckprozessparameterwerte 33, 33' bestimmt. Hierzu werden Objektdaten 20, die die Geometrie eines Objekts 1 angeben, analysiert. Unter Verwendung des Meta-Modells 40 können Druckprozessparameterwerte 33, 33' bestimmt werden, so dass gewünschte Erzeugniseigenschaften des Druckerzeugnisses 2 erreicht werden. Die gewünschten Erzeugniseigenschaften werden durch Zielwerte 37, 37' beschrieben.

In einem Ausführungsbeispiel wird ein Zylinder gedruckt. Der Zylinder weist in einem unteren, einer Bodenfläche zugewandten Bereich einen kleinen Radius auf, der in Richtung vom Boden weg, größer wird. Aufgrund der unterschiedlichen Querschnitte des Zylinders können z.B. die Scan-Geschwindigkeit sowie die Laserleistung derart angepasst werden, dass die Eigenschaften des durch den Laser erzeugten Schmelzbads (Schmelzbandtiefe, - Länge), in allen Druckschichten S1, S2, S3 gleich sind, bzw. annähernd gleich sind. Somit können homogene Materialeigenschaften des Druckerzeugnisses 2 realisiert werden.

Fig. 4 zeigt den Zusammenhang einer Erzeugniseigenschaft 21 und Druckprozessparametern 31, 31', der durch ein Meta-Modell 40 beschrieben wird.

Das Meta-Modell 40 gibt also an, wie sich die Erzeugniseigenschaft 21 ändert, wenn Werte von Druckprozessparametern 31, 31' geändert werden. Dabei gibt ein Meta-Modell 40 für jeden Wert eines Druckprozessparameters 31, 31' den Wert einer Erzeugniseigenschaft 21 an. Bei dem Meta-Modell 40 handelt es sich in dem dargestellten Ausführungsbeispiel demnach um ein kontinuierliches Modell. Das Meta-Modell 40 kann beispielsweise durch Spline-Interpolation umgesetzt werden. Denkbar ist auch, dass das Meta-Modell 40 als ein neuronales Netz oder unter Verwendung einer sonstigen Regressionsanalyse aus diskreten Werten, insbesondere einer Prozessfensterkarte 32, erzeugt ist.

Fig. 5 zeigt eine schematische Darstellung einer Prozessfensterkarte 32, die zur Erzeugung eines Meta-Modells 40 eingesetzt wird. Die Fig. 5 zeigt ein Koordinatensystem, welches durch die zwei Achsen 31, 31' aufgespannt wird. Die Prozessfensterkarte 32 gibt den Zusammenhang von einzelnen Werten der Druckprozessparameter 31, 31' zu Erzeugniseigenschaftswerten 22, 22' an. Im dargestellten Ausführungsbeispiel wird lediglich eine Erzeugniseigenschaft 32 dargestellt.

In anderen Ausführungsbeispielen kann eine Prozessfensterkarte 32 einen mehrdimensionalen Parameterraum angeben, der den Zusammenhang einer Vielzahl von Druckprozessparametern 31, 31' zu einer Vielzahl von Erzeugniseigenschaften 21, 21' angibt.

Die in der Fig. 5 gezeigte Prozessfensterkarte 32 ist experimentell erstellt. Zum experimentellen Bestimmen einer Prozessfensterkarte 32 werden eine Vielzahl von Druckerzeugnissen 2 unter Verwendung unterschiedlicher Druckprozessparameterwerte 33, 33' gedruckt. Die Druckerzeugnisse 2 können dann in einem Labor untersucht werden, so dass die Erzeugniseigenschaftwerte 22, 22' genau bestimmt werden.

In einem Ausführungsbeispiel werden die Prozessfensterkarten 32 durch Simulationsverfahren bestimmt. Bei bekannten Zusammenhängen von Druckprozessparametern 31, 31' zu Erzeugniseigenschaften 21, 21' kann solch eine Simulation durchgeführt werden. Somit Kann teuren Experimenten vorgebeugt werden.

Eine Prozessfensterkarte 32 stellt somit eine diskrete Menge von Druckprozessparameterwerten 33, 33' und zugehörigen Erzeugniseigenschaftswerten 22, 22' dar. Ferner enthält die Prozessfensterkarte 32 Angaben darüber, welche Druckprozessparameterwerte 33, 33' einen akzeptablen Qualitätsbereich 35 angeben. Druckprozessparameterwerte 33, 33', die außerhalb des Qualitätsbereichs 35 liegen, führen zu ungenügenden Druckergebnissen. Ein Qualitätsbereich 35 wird z.B. durch zwei Grenzwerte 36, 36' angegeben. Die Grenzwerte 36, 36' geben dann die äußeren Grenzen des Qualitätsbereich 35 an.

Aus der Prozessfensterkarte 32 wird anschließend ein Meta-Modell 40 erstellt. Die diskreten Punkte der Prozessfensterkarte 32 können über bekannte Verfahren, z.B. die Splicing-Interpolation oder das Trainieren eines neuronalen Netzes, in ein kontinuierliches Modell überführt werden.

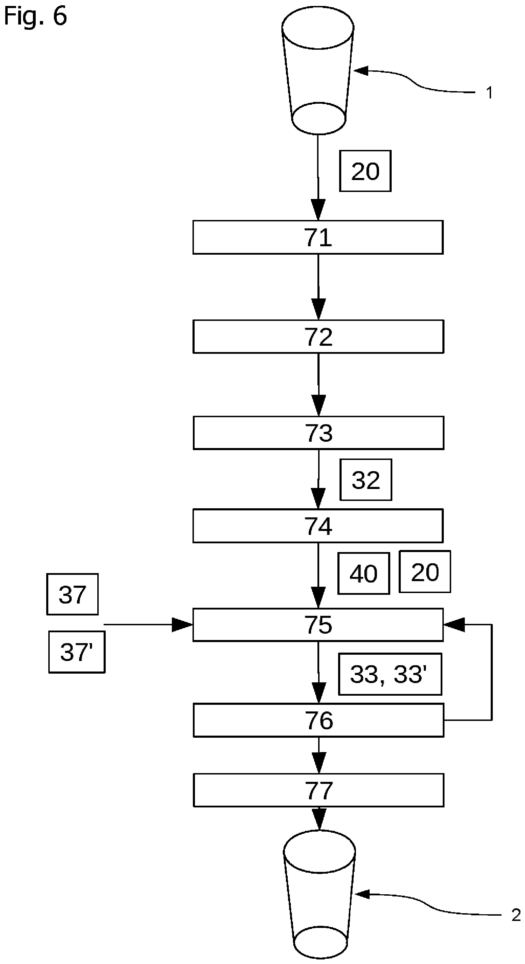

Fig. 6 zeigt ein schematisches Flussdiagramm zum Drucken eines Objekts 1. Für das Objekt 1 werden zunächst Objektdaten 20 bereitgestellt, die die Geometrie des Objekts 1 und des Druckerzeugnisses 2 angeben, hier als STL-Daten. Üblicherweise wird in einem sogenannten Slicing-Schritt das digitale 3D-Modell, welches durch die Objektdaten 20 angegeben wird, in Schichten unterteilt, die den zu druckenden Schichten S1, S2, S3 entsprechen. Das in Schichten S1, S2, S3 unterteilte 3D-Modell wird in Schritt 72 dazu verwendet, eine Vielzahl von Objekteigenschaften 21, 21' des Druckerzeugnisses 2 mit den zugehörigen Prozessparametern 31, 31' zu ermitteln. Basierend auf den bestimmten Objekteigenschaften 21, 21' wird im Schritt 73 eine Prozessfensterkarte 32 erstellt. Die Prozessfensterkarte 32 wird im Schritt 74 zur Bestimmung eines Metamodells 40 verwendet. Wie bereits vorstehend beschrieben können hierzu Spline-Interpolation oder das Trainieren eines neuronalen Netzes verwendet werden.

Im Schritt 75 werden unter Verwendung des Meta-Modells 40 und den Objektdaten 20, Druckprozessparameterwerte 33, 33' bestimmt. Dabei kann auch ein Druckpfad bestimmt werden. Der Druckpfad kann zur Bestimmung der Druckprozessparameterwerte 33, 33' verwendet werden.

Im Schritt 76 können die bestimmten Druckprozessparameterwerte 33, 33' optimiert werden. Das heißt, dass unter anderem sichergestellt wird, dass die Druckerzeugniseigenschaftswerte 22, 22' immer in einem von der Prozessfensterkarte 32 bestimmten Qualitätsbereich 35 liegen. Darüber hinaus kann für die mit bestimmten Druckprozessparameterwerten 33, 33' zu erwartenden Erzeugniseigenschaftswerten 22, 22', ein Gesamtfehler für die Objektdaten 20 berechnet werden. Dabei wird für alle Erzeugniseigenschaftswerte 22, 22' die Differenz von Zielwerten 37, 37' berechnet. Unter Verwendung von bekannten Minimierungsverfahren, z.B. Gradientenverfahren, kann der Gesamtfehler durch Anpassung der Prozessparameterwerte 33, 33' minimiert werden.

Die bestimmten Druckprozessparameterwerte 33, 33' werden im Schritt 77 zum Steuern eines 3D-Druckers verwendet. In einem Ausführungsbeispiel wird in einem ersten Bereich B1 ein erster Druckprozessparameterwert 33 verwendet um einen Druckerparameter 12 einzustellen. In einem zweiten Bereich B2 wird ein zweiter Druckprozessparameterwert 33' zum Ändern des Druckerparameters 12 verwendet. Somit werden bei der Steuerung des 3D-Druckers 10 auch innerhalb einer Schicht S1, S2, S3 unterschiedliche Druckprozessparameterwerte 33, 33' verwendet, insbesondere in Abhängigkeit von der Geometrie des zu druckenden Objekts 1.

Ein Vorteil des beschriebenen Verfahrens liegt insbesondere darin, dass das Meta-Modell 40 nur einmal für ein Material berechnet werden muss. Anschließend kann es für beliebig viele Werkstücke mit unterschiedlichen Geometrien eingesetzt werden.

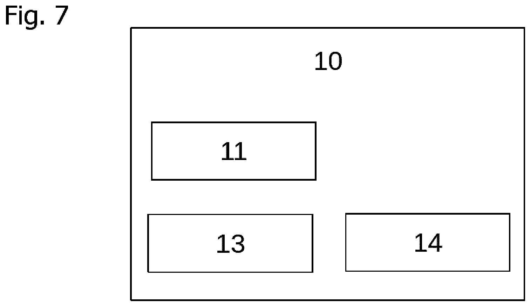

Fig. 7 zeigt einen exemplarischen 3D-Drucker 10, der eine Strahlenquelle 11, einen Prozessor 14 und eine Speichereinrichtung 13 aufweist. In der Speichereinrichtung 13 sind Instruktionen gespeichert, die den 3D-Drucker 10 dazu veranlassen die Strahlenquelle 11 unter Berücksichtigung der Druckprozessparameterwerte 33, 33' zu steuern.

An dieser Stelle sei darauf hingewiesen, dass alle oben beschriebenen Teile für sich allein gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- 1: Objekt
- 2: Druckerzeugnis
- 10: 3D-Drucker
- 11: Strahlenquelle
- 12: Druckerparameter
- 13: Speichereinrichtung
- 14: Recheneinrichtung
- 20: Objektdaten
- 21, 21': Erzeugniseigenschaft
- 22, 22': Erzeugniseigenschaftswert
- 31, 31': Druckprozessparameter
- 32: Prozessfensterkarte
- 33, 33': Druckprozessparameterwert
- 35: Qualitätsbereich
- 36, 36': Grenzwerte
- 37, 37: Zielwert
- 40: Meta-Modell
- S1-S3: Druckschicht
- 60: Verfahren zum Bestimmen eines Prozessparametersatzes
- 61, 62: Verfahrensschritt
- 70: Verfahren zum Bestimmen eines Prozessparametersatzes
- 71-77: Verfahrensschritt
- B1, B2: Druckbereich

## Patentansprüche

1. Verfahren (60, 70) zum Bestimmen von Druckprozessparameterwerten (33, 33') für einen 3D-Drucker (10), umfassend
- Erzeugen (61, 74) mindestens eines Meta-Modells (40), wobei das mindestens eine Meta-Modell (40) eine Beziehung zwischen mindestens einem Druckprozessparameter (31, 31') und mindestens einer Erzeugniseigenschaft (21, 21') eines Druckerzeugnisses (2) für Objektdaten (20) angibt, wobei die Objektdaten (20) eine digitale Repräsentation eines zu druckenden Objekts (1) angeben;
- Bestimmen (62, 75) von mindestens einem ersten Druckprozessparameterwert (33, 33') für den mindestens einen Druckprozessparameter (31, 31') in einem ersten Druckbereich (B1) und mindestens einem zweiten Druckprozessparameterwert (33, 33') für den mindestens einen Druckprozessparameter (31, 31') in einem zweiten Druckbereich (B2) unter Berücksichtigung des mindestens einen Meta-Modells (40) und den Objektdaten (20).

2. Verfahren (60, 70) nach einem der vorhergehenden Ansprüche,
**dadurch gekennzeichnet, dass**
der erste Druckprozessparameterwert (33) und der zweite Druckprozessparameterwert (33') sich unterscheiden, insbesondere um einen numerischen Wert größer 0,03% des ersten bzw. des zweiten Druckprozessparameterwerts (33, 33').

3. Verfahren (60, 70) nach einem der vorhergehenden Ansprüche,
**gekennzeichnet durch**
ein Optimieren (76) mindestens einer Erzeugniseigenschaft (21, 21') des Druckerzeugnisses (2) unter Verwendung des mindestens einen Meta-Modells (40) und unter Berücksichtigung der Objektdaten (20).

4. Verfahren nach einem der vorhergehenden Ansprüche, insbesondere nach Anspruch 3,
**dadurch gekennzeichnet, dass**
das Optimieren (76) ein Minimieren von
- einer Gesamtabweichung der mindestens einen Erzeugniseigenschaft (21, 21') von einem Zielwert; und/oder
- einem Gradienten einer Erzeugniseigenschaft (21, 21') zwischen nebeneinander angeordneten Schmelzbahnen
umfasst.

5. Verfahren nach einem der vorhergehenden Ansprüche,
**dadurch gekennzeichnet, dass**
das Verfahren (60, 70) ferner umfasst:
- Simulieren (72) und/oder experimentelles Bestimmen (72) mindestens einer Objekteigenschaft (21, 21') des Druckerzeugnisses (2) für die Objektdaten (20) und mindestens einem zugeordneten Druckprozessparameter (31, 31');
- Erstellen (73) mindestens einer Prozessfensterkarte (32), wobei die mindestens eine Prozessfensterkarte (32) eine Zuordnung von mindestens einem Druckprozessparameterwert (33, 33') des zugeordneten Druckprozessparameters (31, 31') zu einem Erzeugniseigenschaftswert (22, 22') des Druckerzeugnisses (2) angibt,
wobei das mindestens eine Meta-Modell (40) unter Berücksichtigung der mindestens einen Prozessfensterkarte (32) erzeugt wird.

6. Verfahren nach einem der vorhergehenden Ansprüche,
**dadurch gekennzeichnet, dass**
der erste Druckbereich (B1) einer zu druckenden Druckschicht und der zweite Druckbereich (B2) derselben zu druckenden Schicht (S1, S2, S3) zugeordnet sind.

7. Verfahren nach einem der vorhergehenden Ansprüche,
**dadurch gekennzeichnet, dass**
die Objektdaten (20) die Geometrie des Druckerzeugnisses (2) angeben.

8. Verfahren nach einem der vorhergehenden Ansprüche, insbesondere nach Anspruch 7,
**dadurch gekennzeichnet, dass**
der erste Druckbereich (B1) und der zweite Druckbereich (B2) unter Berücksichtigung der Objektdaten (20), insbesondere einer Lokalgeometrie, ausgewählt werden.

9. Verfahren nach einem der vorhergehenden Ansprüche,
**dadurch gekennzeichnet, dass**
die mindestens eine Prozessfensterkarte (32) mindestens einen Qualitätsbereich (35) des Druckerzeugnisses (2) angibt, wobei der mindestens eine Erzeugniseigenschaftswert (22, 22') innerhalb von definierten, insbesondere numerischen, Grenzwerten (36, 36') in der Prozessfensterkarte (32) liegt.

10. Verfahren nach einem der vorhergehenden Ansprüche,
**dadurch gekennzeichnet, dass**
der mindestens eine Druckprozessparameter (31, 31')
- die Leistung des 3D-Druckers (10) bzw. einer Strahlenquelle,
- die Scangeschwindigkeit;
- die Schichtdicke einer Schicht,
- die Überlappung von Druckbahnen bzw. Schmelzspuren,
- den Linienabstand von Druckbahnen bzw. Schmelzspuren,
- den Fokusdurchmesser eines Lasers oder eines Elektronenstrahls,
- die Pulsfolge einer Strahlquelle,
- die Anzahl der Belichtungen, und/oder
- die Belichtungsmuster
angibt.

11. Verfahren zum Steuern eines 3D-Druckers (10), Folgendes aufweisend:
- Bestimmen mindestens eines ersten Druckprozessparameterwerts (34) für einen Druckprozessparameter (31, 31') und mindestens eines zweiten Druckprozessparameterwerts (34') für den Druckprozessparameter (31') für einen 3D-Drucker (10) nach einem der vorhergehenden Ansprüche;
- Steuern (77) des 3D-Druckers (10) unter Verwendung des ersten mindestens einen und des zweiten mindestens einen Druckprozessparameterwerts (34, 34").

12. Verfahren nach Anspruch 11,
**dadurch gekennzeichnet, dass**
das Steuern (77) des 3D-Druckers (10) das Einstellen eines Druckerparameters (12) unter Verwendung des ersten mindestens einen und/oder des zweiten mindestens einen Druckprozessparameterwerts (33, 33') umfasst.

13. Verfahren nach Anspruch 11 oder 12,
**dadurch gekennzeichnet, dass**
das Steuern (77) des 3D-Druckers (10) das Betreiben des 3D-Druckers (10) unter Verwendung des ersten Druckprozessparameterwerts (31) in einem ersten Bereich (B1) einer Druckschicht (S1, S2, S3) und das Betreiben des 3D-Druckers (10) unter Verwenden des zweiten Druckprozessparameterwerts (31') in einem zweiten Bereich (B2) der Druckschicht (S1, S2, S3) umfasst.

14. Computer-lesbares Speichermedium (13), welches Instruktionen enthält, die (mindestens) einen Prozessor (14) dazu veranlassen, ein Verfahren nach einem der vorhergehenden Ansprüche zu implementieren, wenn die Instruktionen durch den Prozessor (14) ausgeführt werden.

15. 3D-Drucker (10), Folgendes aufweisend:
- ein Speichermedium (13) nach Anspruch 14,
- einen Prozessor (14), der dazu ausgebildet ist, die auf dem Speichermedium (13) gespeicherten Instruktionen, auszuführen;
- eine Strahlenquelle (11),
**dadurch gekennzeichnet, dass**
der Prozessor (13) weiter dazu ausgebildet ist:
- die Strahlenquelle (11) unter Verwendung eines ersten Druckprozessparameterwerts (31) in einem ersten Bereich (B1) einer Druckschicht (S1, S2, S3) zu steuern und
- eine Strahlenquelle (11) unter Verwenden eines zweiten Druckprozessparameterwerts (31') in einem zweiten Bereich (B2) der Druckschicht (S1, S2, S3) zu steuern.

16. 3D-Drucker (10) nach Anspruch 15,
**dadurch gekennzeichnet, dass**
der 3D-Drucker (10) als ein Elektronenstrahldrucker oder als ein Laserdrucker ausgebildet ist.
